(19) Europäisches Patentamt

European Patent Office

Office européen des brevets

(11) EP 1 271 061 A2

(12) EUROPEAN PATENT APPLICATION

(43) Date of publication:
02.01.2003 Bulletin 2003/01

(51) Int Cl.⁷: F24C 7/08

(21) Application number: 02012135.6

(22) Date of filing: 01.06.2002

(84) Designated Contracting States:
AT BE CH CY DE DK ES FI FR GB GR IE IT LI LU
MC NL PT SE TR
Designated Extension States:
AL LT LV MK RO SI

(30) Priority: 29.06.2001 IT PN20010047

(71) Applicant: ELECTROLUX PROFESSIONAL S.p.A.
33170 Pordenone (IT)

(72) Inventor: Furlanetto, Riccardo
30024 Musile di Piave, Venezia (IT)

(74) Representative: Giugni, Valter
PROPRIA S.r.l.,
Via Mazzini 13
33170 Pordenone (IT)

(54) **Cooking oven with control arrangement for the core temperature probe**

(57) Cooking oven equipped with a core temperature probe adapted to be introduced in the food to be cooked and provided with a plurality of temperature sensors aligned with each other and adapted to deliver an electric signal correlated with the respective temperature, means for processing said electric signals, a support arrangement situated inside the cooking cavity of the oven for sustaining the core temperature probe, and means for measuring the temperature inside said cooking cavity, in which said core temperature probe, said processing means and said support arrangement are adapted to determine whether, during a cooking cycle, the core temperature probe is inserted in a given, pre-defined manner in the food being cooked.

In a preferred manner, the support arrangement is formed in a manner so that, when the core temperature probe is inserted in a pre-defined manner in said arrangement, some defined ones of said temperature sensors are covered by at least a portion of said support arrangement, while some other sensors are not covered.

FIG. 3

EP 1 271 061 A2

## Description

The present invention refers to a food cooking oven, in particular an oven designed for use in catering and commercial food-service applications, equipped with a temperature probe intended for insertion in the food being cooked and, therefore, for the detection of the core temperature of such a food in such a manner as to enable the cooking process to be controlled and adjusted in the most appropriate and timely way.

Appropriately stressed in this connection should also be the fact that the priority task that such a core temperature probe is requested to perform lies in identifying the lowest allowable temperature reached within the food being cooked in view of ensuring, for a number of only too obvious reasons, that even the innermost parts of the food are subject to an adequate cooking action. To such a purpose, the core temperature probe comprises a metal needle-shaped rod which is inserted in the food being cooked, and which includes in its interior a plurality of heat sensors of a traditional type that are distributed in a more or less regular manner along said needle-like metal rod portion. The purpose of such a configuration lies in the possibility for as large as possible an inner portion of the food to be controlled in such a manner as to be able to most precisely detect the lowest allowable temperature thereof, the value and trend pattern of which are actually used as a parameter which the entire control of the cooking process is made conditional to.

The correct manner in which such a kind of core temperature probe is actually capable of operating is of the utmost importance and such a capability is particularly requested, and the need for it particularly felt, when the oven in which it is used is performing an automatic cooking process, i.e. a cooking process which is carried out according to a computer-controlled, pre-stored programme, and which must accordingly be capable of being controlled by accurate signals concerning the evolution, or trend pattern, of the on-going cooking operation, or when large amounts of food with a rather heavy thickness are being cooked, so that the ability to timely monitor the core temperature of such foods is a decisive factor as far as the final quality the on-going cooking process is concerned. Anyway, the above considerations are generally well-known to all those skilled in the art and have been set forth here by mere way of introducing the actual ground on which the present invention is resting.

Notwithstanding the importance of being able to use a core temperature probe in all of the above cited cases, it may nevertheless occur that, owing to a number of reasons that can be easily figured out and shall therefore not be dealt with any further here, the core temperature probe fails to be correctly inserted in the food being cooked; when this occurs, the core temperature probe may then find itself in any of the following positions:

- it may have been forgotten and left therefore lying in its support arrangement, which is usually situated on a wall of the cooking cavity of the oven;

- it may have been duly inserted in the food initially, but then caused to accidentally slip out therefrom, so that it lies loose and unusable within the cooking cavity of the oven;

- it may actually have been introduced in the food, but only partially, so that the information it provides on the core temperature of the food, and in particular on the lowest allowable temperature thereof, turns out to be rather unreliable and, therefore, not capable of being used to any effective extent.

The need therefore arises for appropriate arrangements and means to be provided, which are capable of detecting the position of the core temperature probe during the cooking process and, in particular, ascertaining whether such a core temperature probe is inserted correctly in the food and delivering the related information automatically to the user and/or the cooking process control and monitoring devices, so as to enable them to take, in the most appropriate manner, all such measures and actions as may prove necessary.

These aims, along with further features of the present invention, are reached in a food cooking oven provided with support arrangements for the core temperature probe and automatic processing means that are made and work in the manner as recited and defined in the appended claims.

The present invention may be implemented in a preferred, although not sole embodiment that is described in greater detail and illustrated below by way of non-limiting example with reference to the accompanying drawings, in which:

- Figure 1 is a symbolic view of a first embodiment of the core temperature probe according to the present invention;

- Figure 2 is a schematic elevational view of a support arrangement for core temperature probe according to the present invention;

- Figure 3 is a view illustrating symbolically the application of the core temperature probe of Figure 1 in the support arrangement for core temperature probe of Figure 2;

- Figure 4 is a symbolic view of a second embodiment of the support arrangement for core temperature probe to which the present invention applies;

- Figure 5 illustrates a further application mode of the core temperature probe of the foregoing Figure, to which again the present invention applies.

The present invention is based substantially on following considerations: the primary purpose lies in the possibility for the actual position of the core temperature probe to be duly recognized, i.e. identified; in fact, the temperature-related information generated by the core temperature probe depends on the actual position thereof and is delivered to appropriate control and regulation means, which can in turn be programmed so as to be able to automatically activate various respective indication, command and/or actuation functions that are consistent with the received information, with the selected cooking cycle and, possibly, with other pre-defined instructions, so that the oven may be capable of at least to a certain extent controlling and governing itself, i.e. may be given a certain self-control and self-governing capability, even on the basis of the position of said core temperature probe, wherein said position is detected automatically. This is sufficient to explain the importance of having the position of the core temperature probe appropriately determined. In particular, although not solely, such a determination enables the core temperature probe to be checked for proper, i.e. complete insertion in the food being cooked: should this be found as not being the case, an alert-related information is generated which is adapted to let a proper corrective action be taken either automatically or manually.

When not in operation, the core temperature probe is usually replaced in a proper support arrangement provided on a portion of the cooking cavity of the oven; since some particular kinds of support arrangements for core temperature probes constitute in certain cases a part of the invention themselves, some embodiments of the invention illustrated in the following description will refer to respective different types of both core temperature probes and support arrangements for said core temperature probes.

Based on the above considerations, the present invention consists:

- in realizing a core temperature probe support arrangement featuring particular forms;

- in realizing suitable probe temperature probes adapted to be applied to said support arrangements and to provide data concerning the temperature conditions generally prevailing all around said core temperature probes;

- and, finally, in defining proper modes for the position of the core temperature probe to be recognized according to the outcome of said information on the temperature conditions prevailing all around the core temperature probe having been processed.

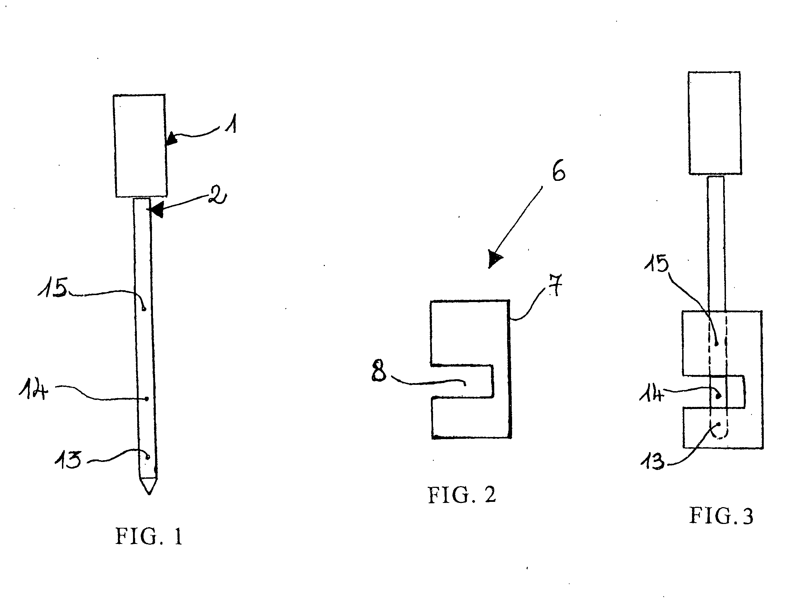

In a first case, and with reference to Figures 1 to 3, the core temperature probe comprises a portion 1, which is quite obviously made of an insulating material owing to its being intended to serve as a handgrip, and a metal needle-like rod 2. In its interior there are arranged in a succession three temperature sensors 13, 14 and 15, which are spaced from each other by a distance "a", and of which the sensor 13 is the closest one to the end portion 5 of said needle-like rod 2. Furthermore, the core temperature probe comprises a plurality of electric connections 9 adapted to enable individual ones of said temperature sensors to appropriate comparator and processing means in which the electric signals coming from said sensors are compared and processed accordingly.

The core temperature probe support arrangement 6 is formed by an approximately cylindrical body 7, which looks much like a sheath and is adapted to accommodate said core temperature probe in such a manner as to almost completely close it off outwardly, i.e. with respect to the outside ambient; in said body 7 there is provided an aperture 8 which is adapted to let the interior of said arrangement establish a direct communication with the cooking cavity of the oven (not specifically shown) in which said support arrangement 6 is positioned.

Said sheath-like body 7 is applied vertically on a wall of the cooking cavity and the core temperature probe is inserted in said body from the top; said sheath-like body then protects the therein enclosed core temperature probe against any influence that may be exerted by the temperature prevailing in the cooking cavity, and this thanks to a couple of particular effects. The first one of these effects is due to the thermal inertia of the sheath, which acts as a thermal bridge diverting outside, i.e. out of the cooking cavity, part of the heat that would otherwise end up by transferring itself on to the core temperature probe.

The second effect is due to the fact that the core temperature probe support arrangement is provided with a thermal inertia of its own, so that that part of the heat that is anyway transferred on to the core temperature probe is unavoidably delayed in doing so.

The aggregate result of these effects is that the course of the temperature on the core temperature probe, when the latter is fully guarded by said sheath, shows a time-lag, i.e. a delay with respect to the course of the temperature in the cooking cavity, while even in particularly unfavourable situations the temperature inside said sheath , and therefore on the core temperature probe, will even under steady-state conditions thereof be lower than the temperature in the cooking cavity of the oven owing to the thermal bridge effect brought about by the sheath itself.

The shape and the size of the above described elements are selected in such a manner as to ensure that, when the core temperature probe is inserted correctly in said support arrangement in the resting position thereof, they fit together so as to arrange themselves in relation to each other in the manner shown in Figure 3.

It should be noticed that, in such a position taken by the various elements in relation to each other, the sensor 14 happens to be fully exposed to the atmosphere of the cooking cavity, since it is substantially immersed therein; quite on the contrary, the sensors 13 and 15 are thermally guarded against the influence of said atmosphere in the cooking cavity owing to the technical reasons that have been set forth above and shall not be repeated here.

Furthermore, the cooking cavity is of course provided with autonomous means of its own for the detection of the internal temperature thereof under generation of corresponding data that are sent to the same aforecited temperature-data comparison and processing means so as to produce the kind of information that will be described in greater detail further on.

The result of such a situation is that, during the initial phase of the cooking process, that is when the temperature is progressively rising in the cooking cavity, the temperature detected and indicated by the sensor 14 will substantially be the same, at each and any moment, as the temperature detected by the traditional temperature sensors provided in the cooking cavity; on the contrary, the temperatures detected and indicated by the sensors 13 and 15 will show a much slower rising course than the one indicated by the sensor 14, and even under steady-state conditions, if the "thermal bridge" effect brought about by the support arrangement 6 is a significant one, the temperature difference between said three sensors will remain well perceivable.

When on the contrary the cooking cycle to be performed calls for the core temperature probe to be inserted in the food being cooked, and for it to be fully inserted, actually, in view of enabling the lowest allowable temperature within such a food to be properly detected as explained earlier in this description, it is possible, thereby realizing the teaching of this patent, for the conditions to be detected and recognized that are typical of both the case in which the core temperature probe is fully or partially inserted in the food and the case in which said core temperature probe is on the contrary left out of the food, i.e. is not inserted therein, so as to tell which condition actually exist.

In fact, when the core temperature probe is either fully or partially inserted in the food being cooked, one or more of the following three conditions come to occur, in any combination thereof:

$$T_{min, ctp} < T_{cavity}$$

$$\frac{d\,T_{min, ctp}}{dt} < \frac{d\,T_{cavity}}{dt}$$

$$\frac{d\,t_{min, ctp}}{dt} \leq K$$

wherein $T_{min,ctp}$ represents the lowest temperature measured by a sensor of the core temperature probe and K represents an experimentally or conventionally pre-determined value and is intended to mean that a core temperature probe is assumed to be fully or partially inserted in the food being cooked if the variation in the lowest temperature detected by the core temperature probe is lower than said pre-determined value.

In other words, when even a single and any one of the above cited conditions is detected and recognized, this means that the core temperature probe is inserted in the food.

In all other cases, i.e. when none of the afore cited conditions is detected and recognized, this means that the core temperature probe has not been inserted in the food, but may instead be left loose in the cooking cavity or applied to its support arrangement.

Anyway, in these cases it does not actually matter to know exactly where the core temperature probe is lying, since the mere fact that it is not inserted in the food can be used in view of either generating an appropriate signal or indication directed towards the outside or, depending on the kind of cooking cycle being performed, even starting a proper action directed at modifying and/or correcting the on-going cooking cycle accordingly.

In general, the above described solution is fully generalizable in that the core temperature probe may be provided with a plurality of sensors aligned along the needle-like rod 2, and the core temperature probe support arrangement 6 may cover two or more non-consecutive sensors; in this way, assuming that a heating-up phase is started to raise the temperature in the cooking cavity, only the temperature detected by the sensors (which may be more than one) located between said non-consecutive sensors covered by the core temperature probe support arrangement will follow the course, i.e. rising pattern of the temperature in the cooking cavity, whereas the temperature detected by the other sensors will quite significantly differentiate therefrom.

An advantage deriving from a larger number of sensors being used as compared with the number considered in the described example lies in an improved accuracy and reliability of the detections ensured by said sensors.

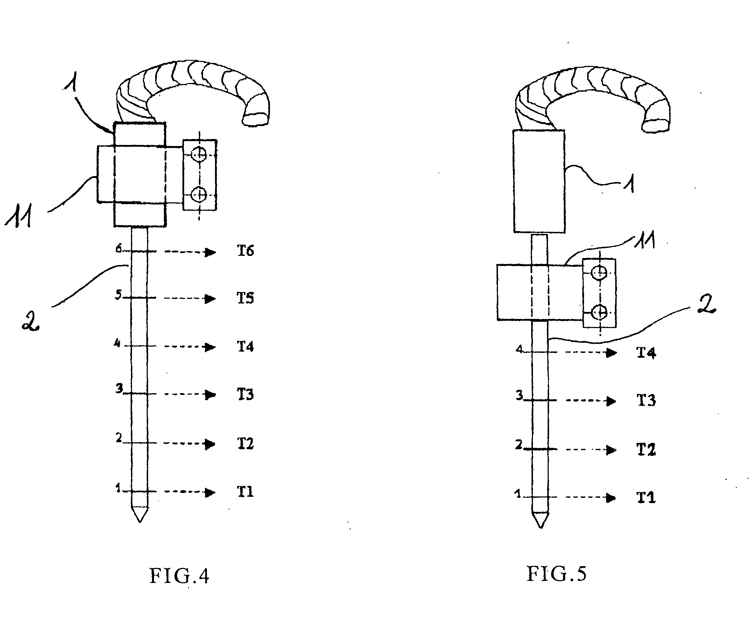

Usually, current core temperature probes are held in so-called clip-type core temperature probe support arrangements 11 that are provided with a simple clasping element adapted to solely engage said handgrip portion 1 of the core temperature probe (Figure 4) or the upper portion of the needle-like rod 2 thereof, i.e. the portion that does not contain any temperature sensor (Figure 5). In this case, the solution is a simple and unavoidably single one, that is to say that, irrespective of the number of temperature sensors provided in this core temperature probe associated to said support arrangement, when the temperature detected by anyone of said sensors turns out to be lower than the temperature in the cooking cavity during a heating-up cycle, this means that the core temperature probe is inserted, to a more or less full extent, in the food being cooked; in all other cases, the core temperature probe is not inserted in the food and may instead be lying in any other scarcely significant position in the cooking cavity.

Also in this case it may be stated that, when the core temperature probe is inserted in the food being cooked, one or more of the following three conditions come to occur, in any combination thereof:

$$T_{min,\,ctp} < T_{cavity}$$

$$\frac{d\,T_{min,\,ctp}}{dt} < \frac{d\,(T_{cavity})}{dt}$$

$$\frac{d\,t_{min,\,ctp}}{dt} \leq H$$

wherein $T_{min,ctp}$ represents again the lowest temperature measured by a sensor of the core temperature probe and H represents an experimentally or conventionally pre-determined value, and is intended to mean that a core temperature probe is assumed to be inserted in the food being cooked if the variation in the lowest temperature detected by the core temperature probe is lower than said pre-determined value.

Furthermore, all means and modes that can be used to collect, store, compare and process data, to display the related results, and to activate pre-defined functions in accordance with the so obtained results can be implemented by anyone skilled in the art of processing and handling information expressed, i.e. available in the form of electronic signals, so that they shall not be dealt with here any further.

In view of an effective interpretation of the signals it will of course prove appropriate for the indicated relations to be considered as verified and, therefore, true when the equalities differ by values that are lower than pre-established quantities and, similarly, the inequalities differ by values that are greater than pre-established quantities which are defined discretionally in accordance with the desired accuracy and reliability of the processed data.

**Claims**

1. Food cooking oven, in particular for catering and foodservice applications, comprising:

   - a cooking cavity for the treatment of the food to be cooked,
   - a temperature probe, in particular a core temperature probe (1, 2), adapted to be inserted into the food to be cooked, and provided with a plurality of distinct temperature sensors (13, 14, 15) arranged in a substantially aligned manner along the extension of the needle-like rod of said probe, each one of said temperature sensors being adapted to generate at least an electric signal that is correlated with the temperature detected by the respective temperature sensor, said core temperature probe being further provided with a plurality of electric connections for said respective electric signals, issuing from a same outlet side of said core temperature probe, and an end portion on the opposite side with respect to said outlet side of said electric connections,

   - receiving and processing means connected to said electric connections and adapted to process said electric signals and generate a corresponding information as an outcome of said processing,
   - a support arrangement (7) adapted to engage said core temperature probe and applied on to one of the inner walls of said cooking cavity,
   - means for the detection of the inner temperature of said cooking cavity, as well as related connections to said same means for receiving and processing the electric signals coming from said sensors,

   **characterized in that** said core temperature probe, said connections, said receiving and processing means and said support arrangement are altogether adapted to determine whether, during a definite phase of a cooking cycle inside said cooking cavity, said core temperature probe is inserted in a pre-defined manner in said food being cooked.

2. Food cooking oven according to claim 1, **characterized in that** said support arrangement (7) is formed in a manner so that, when said core temperature probe is inserted and held in a pre-defined manner in said support arrangement thereof, some defined ones of said temperature sensors (13, 15) are covered by at least a portion of said support arrangement.

3. Food cooking oven according to claim 2, **characterized in that** said temperature probes are in the number of at least three, and that , when said core temperature probe is inserted and held in said pre-defined manner in said support arrangement thereof, the sensor that lies closest to said end portion is covered by a portion of said support arrangement (7), whereas at least an intermediate sensor (14) is not covered by any portion of said support arrangement.

4. Food cooking oven according to claim 3, **characterized in that** said means are adapted to detect, within of a pre-defined period of time, the existence or the absence of at least one of following conditions:

$$T_{min, ctp} < T_{cavity}$$

$$\frac{d\, T_{min, ctp}}{dt} < \frac{d\, T_{cavity}}{dt}$$

$$\frac{d\, t_{min, ctp}}{dt} \leq K$$

5. Food cooking oven according to claim 1, **characterized in that** said support arrangement (11) is formed in a manner that, when said core temperature probe is held in said pre-defined manner, none of said temperature sensors is covered by any portion of said support arrangement.

6. Food cooking oven according to claim 5, **characterized in that** said means are adapted to detect, within of a pre-defined period of time, the existence or the absence of at least one of following conditions:

$$T_{min, ctp} < T_{cavity}$$

$$\frac{d\, T_{min, ctp}}{dt} < \frac{d(T_{cavity})}{dt}$$

$$\frac{d\, t_{min, ctp}}{dt} \leq H$$

7. Food cooking oven according to any of the preceding claims, **characterized in that** at least some of the individual distinct conditions detected according to the preceding claims 4 and 6 are indicated outside by appropriate display and/or alarm devices.

FIG. 3

FIG. 2

FIG. 1

FIG.5

FIG.4

8